# EUROPEAN PATENT APPLICATION

(11) **EP 4 307 001 A1**
(43) Date of publication of application: **17.01.2024**
(21) Application number: 22767151.8
(22) Date of filing: 08.03.2022
(51) Int. Cl.: G01S 13/89, G01S 13/538, G08G 1/01

(54) **OBJECT-POSITION DETECTING DEVICE AND METHOD**

(30) Priority: 10.03.2021 JP 2021038305
(71) Applicant: OMRON Corporation, Kyoto 600-8530 (JP)
(72) Inventor: KUBO, Mitsuaki, Kyoto-shi, Kyoto 600-8530 (JP); MATSUURA, Keiki, Kyoto-shi, Kyoto 600-8530 (JP); KOIZUMI, Masayuki, Kyoto-shi, Kyoto 600-8530 (JP); SHICHIJO, Daiki, Tokyo 108-0075 (JP); IWADE, Ayaka, Kyoto-shi, Kyoto 600-8530 (JP); OKUNO, Yutaro, Kyoto-shi, Kyoto 600-8530 (JP)
(74) Representative: HGF
(86) International application number: PCT/JP2022/010041
(87) International publication number: WO 2022/191197

(57) **Abstract**

The present invention provides an object-position detector apparatus and detection method capable of detecting an object with high accuracy even in such a situation that adjacent objects or structures are close to each other such that reflected waves interfere with each other, as compared with the prior art. In the object-position detector apparatus that detects a position of an object based on a radar signal from a radar apparatus, a position estimator unit is configured to estimate presence or absence of and a position of the object using a machine learning model learned by predetermined training image data representing the position of the object, based on image data including the radar signal, and output image data representing the presence or absence of and the position of the estimated object.

## Description

### TECHNICAL FIELD

The present invention relates to an object-position detector apparatus and method for estimating and detecting a position of an object based on radar information from a radar apparatus, for example.

### BACKGROUND ART

In general, a radar apparatus detects a moving object as a target by applying peak detection (CFAR (Constant False Alarm Rate)) or cluster analysis to a reflection intensity and Doppler velocity in an observation area generated from a received radar signal.

For example, Patent Document 1 discloses a radar apparatus capable of suppressing erroneous detection and extracting only a target object with high accuracy. The radar apparatus transmits and receives pulses or continuous waves to create range-Doppler (RD) data from N times (N ≥ 1) of coherent pulse interval (CPI) data, and extracts a cell of a range-Doppler axis exceeding a predetermined threshold for the RD data. Then, the radar apparatus selects a representative value of a cluster to be a target candidate by analyzing the cluster using the extracted cell, extracts range-Doppler of the target from the representative value, performs at least any one of range measurement, speed measurement, and angle measurement processing, and then, outputs a target observation value.

### PRIOR ART DOCUMENT

### PATENT DOCUMENT

Patent Document 1: Japanese Patent Laid-open Publication No. JP2018-205174A

### SUMMARY OF THE INVENTION

### PROBLEMS TO BE SOLVED BY THE INVENTION

However, as compared with an optical system sensor, since it is difficult for the radar apparatus to increase the angle separation resolution due to the restriction of the number of antennas, such a problem is caused that it is difficult to detect an object in such a situation that a plurality of adjacent objects or structures are close to each other such as reflected waves interfere with each other by a method such as CFAR or cluster analysis.

For example, when the CFAR method is used, in a case where two objects are close to each other at the same range and at a range narrower than the radar-specific angular resolution, reflected waves from the two objects interfere with each other, and it becomes difficult to detect the peak of the reflected wave source derived from the target. In addition, when the clustering method is used, it is difficult to separate clusters in a case where two objects move close to each other at the same speed.

An object of the present invention is to solve the above problems and to provide an object-position detector apparatus and method capable of detecting an object with high accuracy even in such a situation that a plurality of adjacent objects or structures are close to each other such that reflected waves interfere with each other, as compared with the prior art.

### SOLUTION TO SOLVE PROBLEMS

According to one aspect of the present invention, an object-position detector apparatus is provided that detects a position of an object based on a radar signal from a radar apparatus. The object-position detector apparatus includes a position estimator unit configured to estimate presence or absence of and a position of the object using a machine learning model learned by predetermined training image data representing the position of the object, based on image data including the radar signal, and output image data representing the presence or absence of and the position of the estimated object.

### ADVANTAGEOUS EFFECTS OF THE INVENTION

Therefore, according to the object-position detector apparatus and the like of the present invention, it is possible to detect an object with high accuracy even in such a situation that a plurality of adjacent objects or structures are close to each other such that reflected waves interfere with each other.

### BRIEF DESCRIPTION OF THE DRAWINGS

Fig. 1 is a block diagram showing a configuration example of an object-position detector apparatus in object estimation according to an embodiment.
Fig. 2 is a block diagram showing a configuration example of the object-position detector apparatus in learning according to the embodiment.
Fig. 3 is a timing chart of a chirp signal of a wireless signal transmitted from a radar apparatus of Figs. 1 and 2.
Fig. 4 is a block diagram showing a first configuration example of a machine learning model of Figs. 1 and 2.
Fig. 5 is a block diagram showing a second configuration example of the machine learning model of Figs. 1 and 2.
Fig. 6A shows an example of image data for the machine learning model of Figs. 1 and 2, and is a diagram showing image data representing a position of a target.
Fig. 6B is a diagram showing image data of a radar signal obtained when a target is present at a position corresponding to the image data of Fig. 6A.
Fig. 7A is a first example of image data for the machine learning model of Figs. 1 and 2, and is a diagram showing image data representing a position of a target.
Fig. 7B is a diagram showing image data of a radar signal obtained when a target is present at a position corresponding to the image data of Fig. 7A.
Fig. 7C is a diagram showing an example of radar image data that corresponds to the image data of Fig. 7B and is training image data for learning provided as training data of the machine learning model.
Fig. 8A shows a second example of image data for the machine learning model of Figs. 1 and 2, and is a diagram showing image data representing a position of a target.
Fig. 8B is a diagram showing image data of a radar signal obtained when a target is present at a position corresponding to the image data of Fig. 8A.
Fig. 8C is a diagram showing an example of radar image data that corresponds to the image data of Fig. 8B and is training image data for learning provided as training data of the machine learning model.
Fig. 9 is a block diagram showing a configuration example and a processing example of an object coordinate detector unit of Fig. 1.
Fig. 10 is a diagram showing dimensions of image data used in the object-position detector apparatus according to a modified embodiment.

### DETAILED DESCRIPTION OF THE EMBODIMENTS

Hereinafter, embodiments according to the present invention will be described with reference to the drawings. It is noted that the same or similar components are denoted by the same reference numerals.

### FINDINGS OF INVENTORS

The present inventors found such a problem that counting does not work well in an environment where multipath fading or clutter occurs in a tunnel, a place where a soundproof wall is close, or the like in an application of measuring the number of passing vehicles using a radar apparatus, for example, and have devised an embodiment of the present invention as means for solving the problem.

In the present invention, a method for estimating a wave source of a radar signal by machine learning is devised instead of a method for combining CFAR and clustering as means for estimating a position of a target, and an image in which a label corresponding to the position of the target is drawn is generated by using time difference time-series information generated by signal processing and a machine learning model for image recognition. As a result, it is characterized in that, even in such a situation of problem caused in CFAR or clustering, the position of each target is estimated with high accuracy. Hereinafter, embodiments will be described.

### EMBODIMENTS

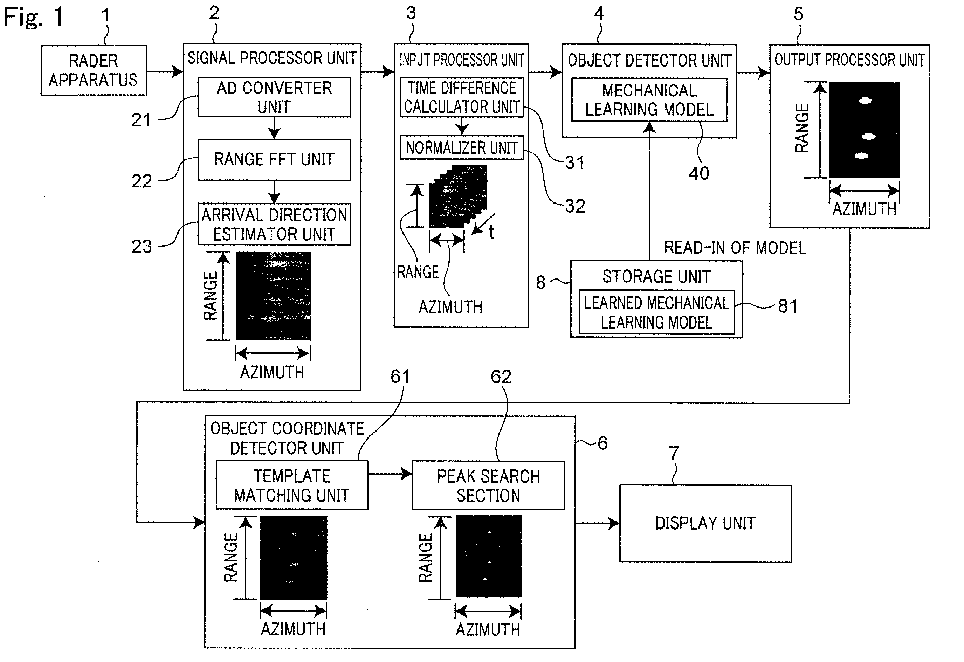

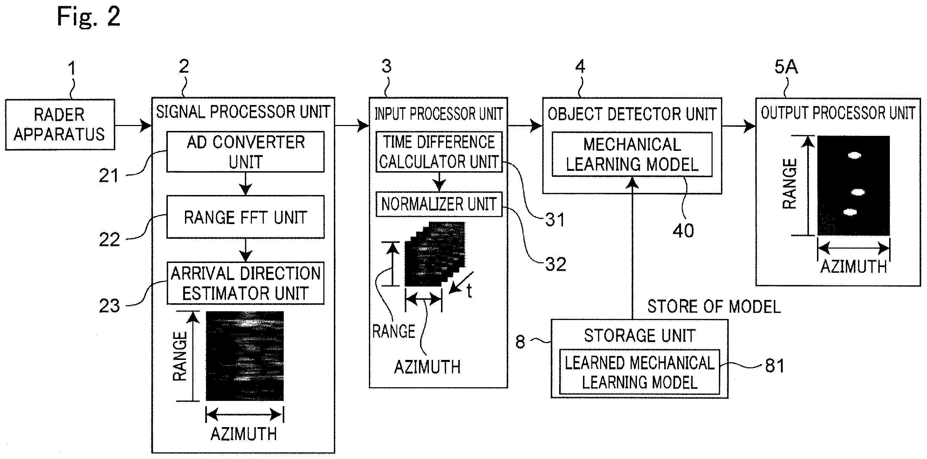

Fig. 1 is a block diagram showing a configuration example of an object-position detector apparatus in object estimation according to an embodiment, and Fig. 2 is a block diagram showing a configuration example of the object-position detector apparatus in learning according to the embodiment.

In the object estimation of Fig. 1, the object-position detector apparatus according to the embodiment includes a radar apparatus 1, a signal processor unit 2, an input processor unit 3, an object detector unit 4, an output processor unit 5, an object coordinate detector unit 6, a display unit 7, and a storage unit 8. In addition, in learning of Fig. 2, the object-position detector apparatus according to the present embodiment includes the radar apparatus 1, the signal processor unit 2, the input processor unit 3, the object detector unit 4, an output processor unit 5A, and the storage unit 8. In this case, the object detector unit 4 includes a machine learning model 40, and stores the learned machine learning model 40 in the storage unit 8 as a learned machine learning model 81 in order to use the learned machine learning model 81 in the estimation detection. It is noted that Figs. 1 and 2 show different diagrams in the object estimation and in the learning, but the output processor unit 5 or 5A may be selectively switched and connected to the object detector unit 4 using switches.

Referring to Figs. 1 and 2, the radar apparatus 1 transmits a wireless signal including a chirp signal toward a target using, for example, a fast chirp modulation (FCM) method, receives the wireless signal reflected by the target, and generates a beat signal which is a radar signal for estimating a range and a relative speed with respect to the target. In this case, in the FCM method, a wireless signal including a chirp signal in which a plurality of chirp signals whose frequencies continuously change are repeated is wirelessly transmitted to a target, and a range and a relative speed with respect to each target present within a detection range are detected. Specifically, in the FCM method, range (range) fast Fourier transform processing (hereinafter, referred to as range FFT processing) is executed on a beat signal generated from a modulation signal for generating a chirp signal and a received signal obtained by receiving a reflected wave of a transmitting signal from a target to estimate a range to the target (see description of a range FFT unit 22 to be described later).

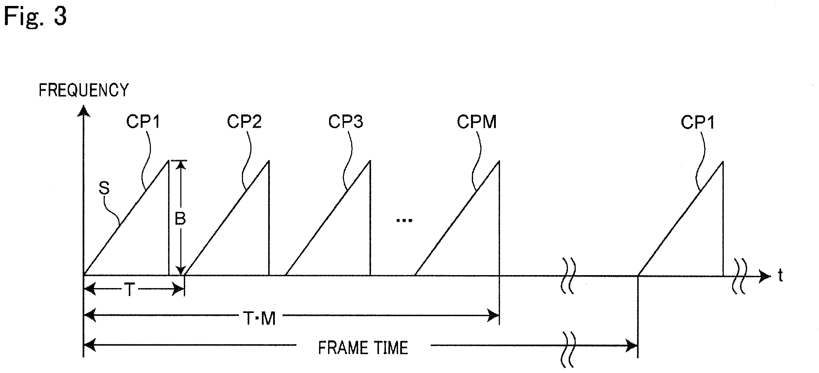

Fig. 3 is a timing chart of a chirp signal of a wireless signal transmitted from the radar apparatus of Figs. 1 and 2. In the present embodiment, received data configuring one piece of radio wave image data is referred to as "one frame", and one frame is configured to include a plurality of chirp signals. Fig. 3 represents a frame of a high-speed frequency modulation continuous wave (FMCW) method, where B indicates a bandwidth of a chirp signal, T indicates a repetition time of the chirp signal, and T . M indicates an active chirp time in one frame. It is noted that the frame time includes an idle time. In this case, for example, assuming that the number of chirps per frame is 24, noise resistance can be enhanced by integrating and averaging a plurality of chirp signals of received wireless signals.

Further, a wireless receiver unit of the radar apparatus 1 receives a wireless signal reflected by a target using, for example, an array antenna including a plurality of antennas, and then mixes the wireless signal with a transmission wireless signal of a wireless transmitting unit and performs low-pass filtering to calculate a plurality of beat signals corresponding to respective antennas and outputs the beat signals to the signal processor unit 2.

Referring to Figs. 1 and 2, the signal processor unit 2 includes an AD converter unit 21, a range FFT unit 22, and an arrival direction estimator unit 23. The AD converter unit 21 performs AD conversion on a plurality of beat signals of the radar signal output from the radar apparatus 1 and outputs the beat signals to the range FFT unit 22. The range FFT unit 22 executes range FFT processing on the input beat signal having subjected to AD conversion, and outputs the processed range FFT spectrum to the arrival direction estimator unit 23. The arrival direction estimator unit 23 estimates the arrival direction (azimuth) of the wireless signal reflected from the target based on the input range FFT spectrum using, for example, a beamforming method, and outputs the estimated arrival direction to the input processor unit 3 in a form of two-dimensional image data (having a predetermined discrete time interval) including information of the reflected signal intensity (for example, a value obtained by converting amplitude values of an I signal and a Q signal orthogonal to each other into logarithmic values) as a pixel value in a two-dimensional image of the range with respect to the azimuth.

Referring to Figs. 1 and 2, the input processor unit 3 includes a time difference calculator unit 31 and a normalizer unit 32. The time difference calculator unit 31 sequentially performs backward difference calculation (calculating finite differences in the time direction) for each predetermined number (for example, 31) of frames in time series on the two-dimensional image data of each pair of time frames temporally adjacent to each other among the image data including the information of the reflected signal intensity (indicating the presence or absence of and the position of the target) as the pixel value in the input two-dimensional image of the range with respect to the azimuth, and generates and outputs three-dimensional image data of the azimuth, the range, where the three-dimensional image data have a plurality of frames of the range with respect to the azimuth in terms of time. Next, the normalizer unit 32 normalizes each pixel value with a predetermined maximum value based on the three-dimensional image data after the backward difference calculation, generates three-dimensional image data after normalization processing, and then, uses the three-dimensional image data as input data to the machine learning model 40.

It is noted that, in the processing of the time difference calculator unit 31, for example, as described above, the backward difference calculation is sequentially performed for each predetermined number of frames in time series on the two-dimensional image data of each pair of time frames temporally adjacent to each other among the image data including the information of the reflection signal intensity as the pixel value, and the estimation frequency is once with respect to the number of frames related to the predetermined number of frames in time series. On the other hand, the present invention is not limited thereto, and the processing of the time difference calculator unit 31 may be performed, for example, as described above, while sequentially shifting the backward difference calculation for the two-dimensional image data of each pair of time frames temporally adjacent to each other among the image data including the information of the reflection signal intensity as the pixel value for each frame in time series. In this case, the estimation frequency is once for one frame.

In addition, in the processing of the time difference calculator unit 31, the backward difference calculation is performed on the two-dimensional image data of each pair of time frames temporally adjacent to each other among the image data including the information of the reflected signal intensity (indicating the presence or absence of and the position of the target) as the pixel value in the two-dimensional image data of the range with respect to the azimuth, and then, a time-series three-dimensional image data is generated that has the dimensions of the azimuth, the range, and has a plurality of frames of the range with respect to the azimuth in terms of times. In this case, as alternative means for the backward difference calculation, Doppler FFT may be performed on the two-dimensional image data of the range with respect to the azimuth to calculate a zero Doppler component in order to suppress clutter, and the zero Doppler component may be subtracted from the original two-dimensional image data. At this time, based on the subtracted two-dimensional force image data, backward difference calculation is performed on the two-dimensional image data of each pair of time frames temporally adjacent to each other to generate time-series three-dimensional image data having the dimensions of the azimuth, the range, and the time, where the time-series three-dimensional image data has a plurality of frames of the range with respect to the azimuth in terms of time.

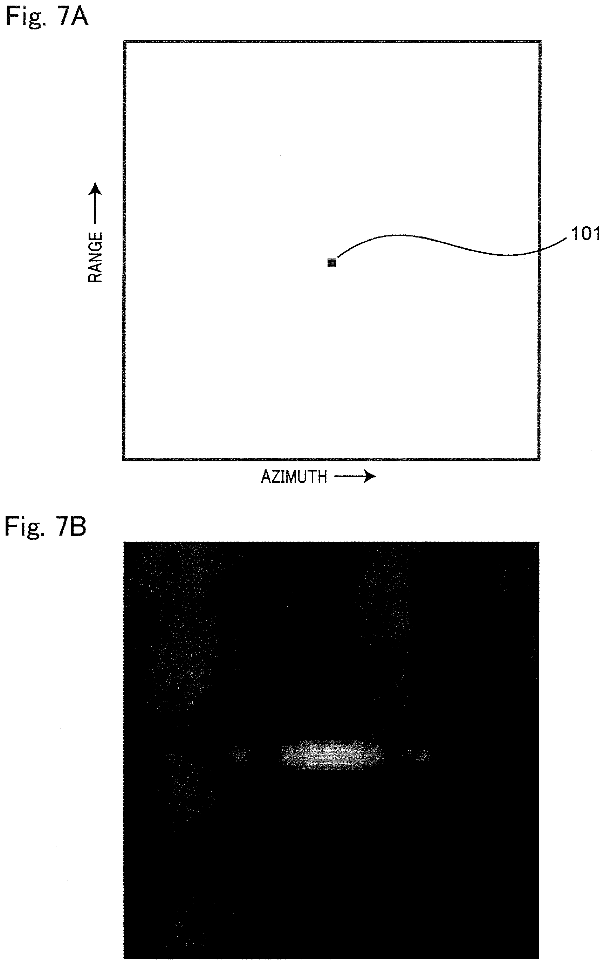

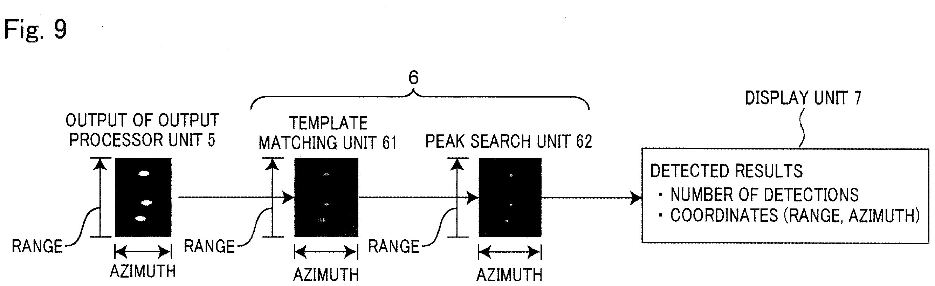

On the other hand, the output processor unit 5A stores two-dimensional training image data (as will be described later with reference to Figs. 7A to 9C, a plurality of pixels is provided in two-dimensional image data (position information of a target is represented as a bird's-eye view) with respect to a known target position) when the position of the target is detected using the radar apparatus 1 in a built-in memory, and inputs the two-dimensional training image data to the object detector unit 4 as output data in the learning with respect to the machine learning model 40. It is noted that the output processor unit in the object estimation is denoted by reference numeral 5, and the output processor unit 5 stores the two-dimensional image data of the estimation result from the object detector unit 4 in a built-in buffer memory, and then outputs the two-dimensional image data to the object coordinate detector unit 6 of Fig. 1.

Table 1 below shows signal processing (types of signal data) and output data formats of the signal processor unit 2 and the input processor unit 3.

**Table 1: Signal processing (types of signal data) and output data formats of signal processor unit 2 and input processor unit 3**

| |
|---|
| I/Q signal acquisition processing (complex number data) of radar apparatus 1: |
| Number of frames x Number of chirps x Number of virtual receiving antennas x Number of acquired samples |
| Integration processing (complex number data) of chirp signal of radar apparatus 1: |
| Number of frames x Number of virtual receiving antennas x Number of acquired samples |
| Range FFT processing (complex number data): |
| Number of frames x Number of virtual receiving antennas x Number of range bins |
| Arrival direction estimation processing (digital beam forming method) (complex number data): |
| Number of frames x Number of azimuth bins x Number of range bins |
| Amplitude absolute value calculation and logarithmic conversion processing (complex number data) of I/Q signal after arrival direction estimation processing: |
| Number of frames x Number of azimuth bins x Number of range bins |
| Time difference calculation processing (complex number data): |
| (Number of frames -1) x Number of azimuth bins x Number of range bins |
| Normalization processing (complex number data): |
| (Number of frames -1) x Number of azimuth bins x Number of range bins |

The object detector unit 4 of Figs. 1 and 2 is an example of a position estimator unit, and includes, for example, a machine learning model 40 configured by a deep neural network (DNN) configured by a convolutional encoder and a convolutional decoder. While the three-dimensional image data after the normalization processing is input as input data, the two-dimensional training image data is input from the output processor unit 5A as output data, and the machine learning model 40 is learned. Thereafter, the learned machine learning model 40 is stored in the storage unit 8 as the learned machine learning model 81. Next, in the object detection in Fig. 1, the object detector unit 4 stores the learned machine learning model 81 in the storage unit 8 as the machine learning model 40 in the built-in memory of the object detector unit 4, and then, uses the model for estimation detection.

In the object detection in Fig. 1, the processing from the radar apparatus 1 to the object detector unit 4 via the signal processor unit 2 and the input processor unit 3 is the same as that in the learning, but the object detector unit 4 performs estimation in the object detection using the machine learning model 40 using the input data, and outputs output data that is two-dimensional image data to the output processor unit 5. The output processor unit 5 stores the two-dimensional image data of the estimation result from the object detector unit 4 in the built-in buffer memory, and then, outputs the two-dimensional image data to the object coordinate detector unit 6 of Fig. 1.

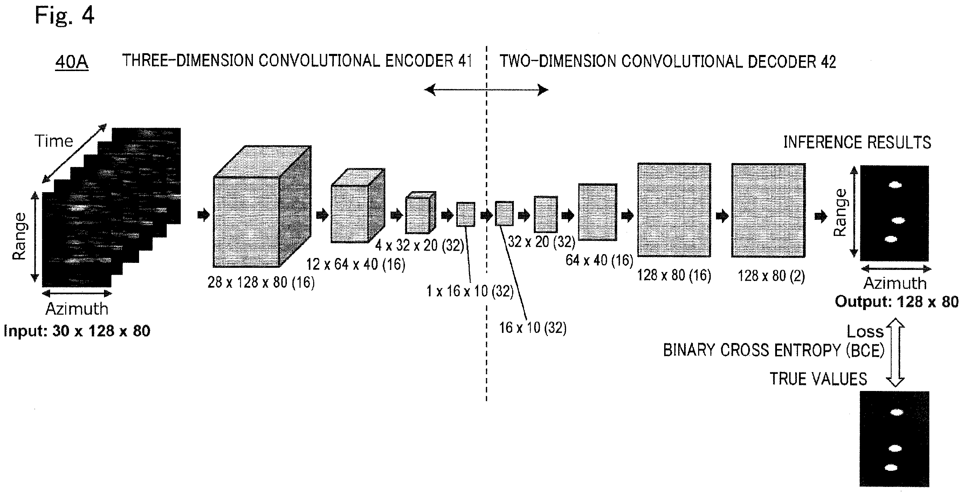

Fig. 4 is a block diagram showing a machine learning model 40A which is a first configuration example (embodiment) of the machine learning model 40 of Figs. 1 and 2. Referring to Fig. 4, the machine learning model 40A includes a three-dimensional convolutional encoder 41 and a two-dimensional convolutional decoder 42.

The three-dimensional convolutional encoder 41 of Fig. 4 includes four signal processor units, and includes a three-dimensional conversion filter 3 x 3 x 3 (16 or 32), a maximum pooling processor unit 2 x 2 x 2, and an activation function processor unit (function Relu). In this case, parentheses indicate the number of filters. In addition, the two-dimensional convolutional decoder 42 includes five signal processor units, including a two-dimensional conversion filter 3 x 3 (16 or 32), an up-sampling processor unit 2 x 2, an activation function processor unit (function Relu), and an activation function processor unit (sigmoid function) of an output layer.

The input data of the three-dimensional convolutional encoder 41 has, for example, the following data format.

### (Time, range, azimuth, channel) = (80,128, 80, 1)

In addition, the output data of the two-dimensional convolutional decoder 42 has, for example, a data format of the following equation.

### (Range, azimuth, channel) = (128, 80, 1)

For example, additional processing such as deep drop or batch normalization of general deep learning may be performed on the basic configuration of the machine learning model 40A of Fig. 4 configured as described above.

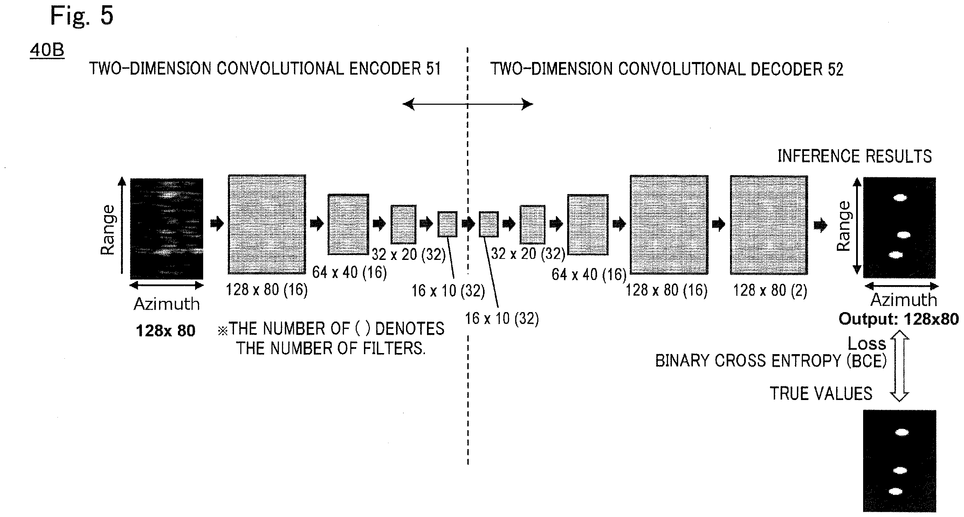

Fig. 5 is a block diagram showing a machine learning model 40B which is a second configuration example (modified embodiment) of the machine learning model of Figs. 1 and 2. In contrast to the machine learning model 40A of Fig. 4, the machine learning model 40B of Fig. 5 includes a two-dimensional convolutional encoder 51 and a two-dimensional convolutional decoder 52.

The two-dimensional convolutional encoder 51 of Fig. 5 includes four signal processor units, including a two-dimensional conversion filter 3 x 3 (16 or 32), a maximum pooling processor unit 2 x 2, and an activation function processor unit (function Relu). In this case, parentheses indicate the number of filters. In addition, the two-dimensional convolutional decoder 52 includes five signal processor units, including a two-dimensional conversion filter 3 x 3 (16 or 32), an up-sampling processor unit 2 x 2, an activation function processor unit (function Relu), and an activation function processor unit (sigmoid function) of an output layer.

The input data of the two-dimensional convolutional encoder 51 has, for example, the following data format.

### (Range, azimuth, channel) = (128, 80, 1)

In addition, the output data of the two-dimensional convolutional decoder 52 has, for example, a data format of the following equation:
(Range, azimuth, channel) = (128, 80, 1).

The machine learning model 40B of Fig. 5 configured as described above is characterized in that the dimension in the time direction is eliminated in the input data (that is, the time difference calculator unit 31 is omitted in Figs. 1 and 2), and the convolutional encoder 51 is configured two-dimensionally. As a result, although the recognition performance of the object detection is reduced as compared with the machine learning model 40A, such a unique advantageous effect of reduced calculation load can be obtained.

Next, an example of image data of the machine learning model 40 of Figs. 1 and 2 will be described below.

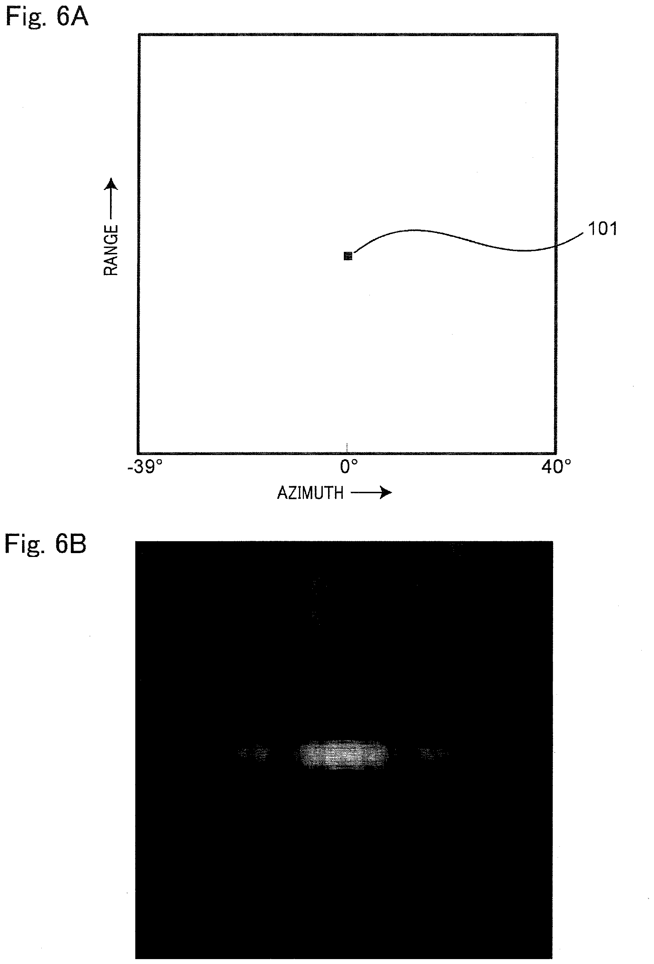

Fig. 6A shows an example of image data for the machine learning model of Figs. 1 and 2, and is a diagram showing image data representing a position of a target. Fig. 6A shows a pixel 101 corresponding to a coordinate point with a target in a two-dimensional image representing a range with respect to an azimuth. On the other hand, Fig. 6B shows image data of a radar signal obtained when a target is present at a position corresponding to the image data of Fig. 6A. Referring to Fig. 6B, the width in the azimuth direction of the main lobe of the radar signal corresponding to the presence of the target is determined by the number of channels in the azimuth direction of the radar apparatus 1. In the implementation example of Fig. 6B, the number of channels in the azimuth direction of the radar apparatus 1 is 8, and the main lobe width thereof corresponds to approximately 22 degrees. In the implementation example, since one degree is expressed by one pixel, the main lobe corresponds to 22 pixels.

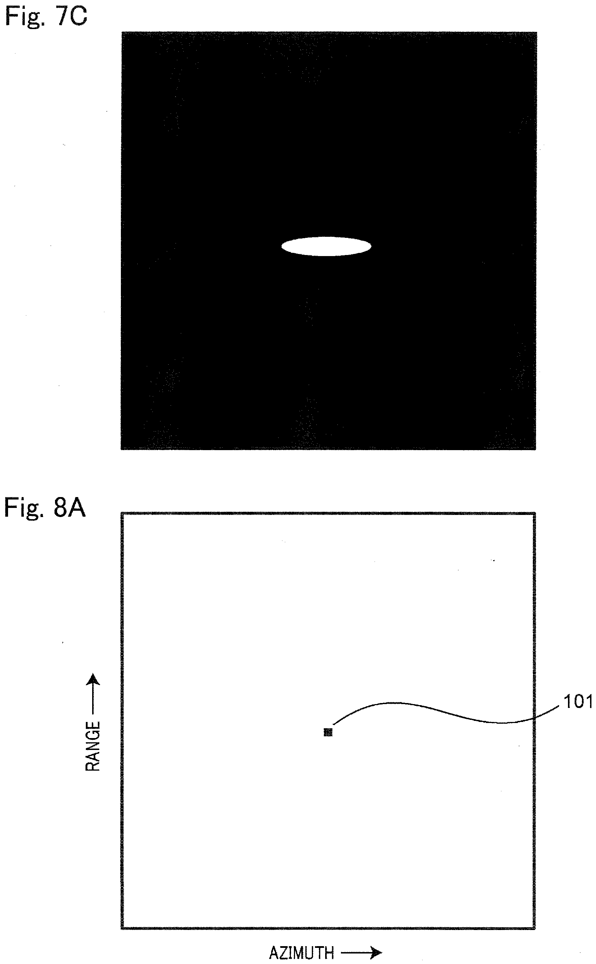

Fig. 7A is a first example of image data for the machine learning model of Figs. 1 and 2, and is a diagram showing image data representing a position of a target. Fig. 7A shows a pixel 101 corresponding to a coordinate point at which a target exists in a two-dimensional image representing a range with respect to an azimuth. On the other hand, Fig. 7B shows image data of a radar signal obtained when a target exists at a position corresponding to the image data of Fig. 7A, and Fig. 7C shows an example of radar image data that corresponds to the image data of Fig. 7B and is training image data for learning provided as training data of the machine learning model 40.

As shown in Fig. 7C, the point (corresponding to the position of the pixel 101 in Fig. 7A) representing the position of the target in the image data (training image data) provided as the teacher data of the machine learning model 40 is set as an "object label" (here, for example, the pixel 101 is located at the center of the object label) that is a graphic having a range including a plurality of pixels instead of a point of one pixel, so that the learning converges with high accuracy. At this time, in the above implementation example, by setting the width in the azimuth direction of the graphic representing the position of the target to 22 pixels or less (the width in the lateral direction of the white portion in the central portion of Fig. 7C), the position of the target can be estimated without impairing the azimuth resolution of the original radar signal. Similarly, for the dimension of the range and other dimensions, it is desirable to set the width of the main lobe determined by the parameter of the radar apparatus 1 as the upper limit of the width in the corresponding dimension direction of the graphic representing the position of the target.

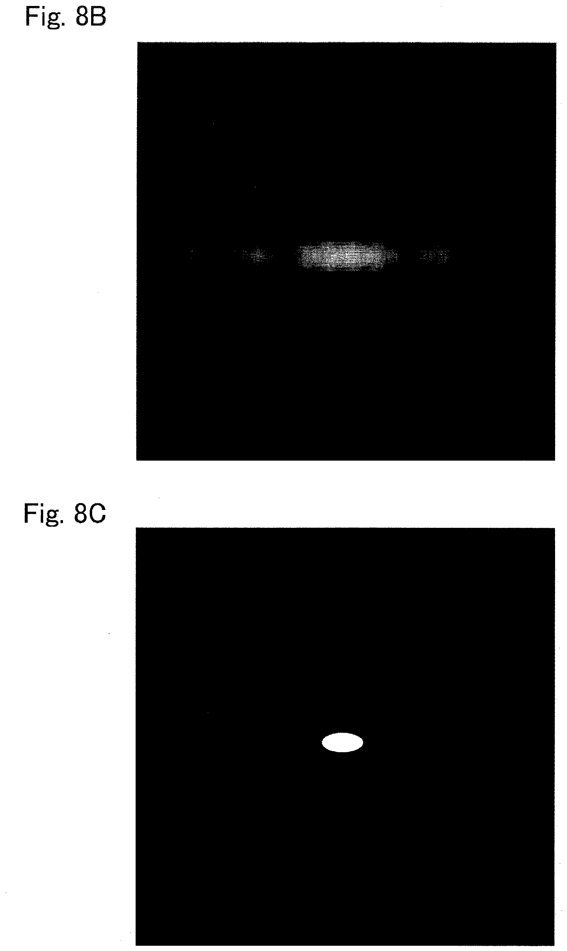

Fig. 8A shows a second example of image data for the machine learning model of Figs. 1 and 2, and is a diagram showing image data representing a position of a target. Fig. 8A shows a pixel 101 corresponding to a coordinate point at which a target exists in a two-dimensional image representing a range with respect to an azimuth. On the other hand, Fig. 8B is a diagram showing image data of a radar signal obtained when a target is present at a position corresponding to the image data of Fig. 8A. Fig. 8C is a diagram showing an example of radar image data that corresponds to the image data of Fig. 8B and is training image data for learning provided as training data of the machine learning model.

According to the simulations and experiments by the inventors, empirically, it is desirable to set the width in the azimuth direction of the graphic representing the position of the target in the range of 0.25 to 0.75 times the main lobe width of the radar apparatus 1 in order to achieve both convergence and resolution of learning. In the above implementation example, the best estimation accuracy is obtained when the number of pixels is about 11 (the width in the horizontal direction of the white portion in the central portion in Fig. 8C), which corresponds to 0.5 times the main lobe width. In addition, the shape of the graphic representing the position of the target is desirably a convex shape in any direction such as an ellipse as shown in Fig. 8C so as to be easily separated in any dimension direction in template matching. Therefore, the size of the object label preferably needs to be at least three pixels or more in each dimension so as to have a convex shape in any dimension direction.

As described with reference to Figs. 6A to 7C, it is preferred that (1) a size of the object label in each dimension direction in the training image data is set as an upper limit, with a main lobe width in each dimension direction in detecting a reflected wave from a point reflection source, or

(2) a size of the object label in each dimension direction in the training image data is set as an upper limit, with a main lobe width in each dimension direction determined from a number of channels in an azimuth direction and a radar bandwidth of the radar apparatus.

As described above, the machine learning model 40 used in the present embodiment is preferably configured as follows.

### 1. INPUT DATA OF MACHINE LEARNING MODEL 40

(1) The input data is image data representing a heat map obtained by performing backward difference calculation on a radar image including information of reflection intensities in each azimuth and each range in a time frame.
(2) The range of the range and azimuth can be arbitrarily set according to the application.
(3) The input image data does not necessarily need to be three-dimensional, and may be inferred or estimated in one frame without time series.
(4) The ranges of the input and output ranges and azimuths (image sizes) are not necessarily the same.
(5) It is also possible to increase the modal of the input data, and for example, the reflection intensities image before the time difference calculation as the second modal as the second channel like the RGB image.

### 2. TEACHER DATA AND OUTPUT DATA OF MACHINE LEARNING MODEL 40

(1) The training image data and the output image data include, for example, a grayscale image expressed in an output range of 0 to 1.
(2) The background or the like other than the target to be detected is expressed as 0.
(3) The target to be detected is set to 1, and is expressed by an object label of a graphic having a predetermined shape of a plurality of pixels.
(4) The position of the target is determined based on a specific frame in the time series, and in the implementation examples of Figs. 6A to 8C, the position of the target was determined based on a center frame in the time series.
(5) The center coordinates of the object label indicate position information of the target.
(6) The size of the object label is represented by a constant size without depending on the size of the target.

Next, a configuration example and a processing example of the object coordinate detector unit 6 in Fig. 1 will be described below.

Fig. 9 is a block diagram showing a configuration example and a processing example of the object coordinate detector unit 6 of Fig. 1. Referring to Figs. 1 and 9, the object coordinate detector unit 6 includes a template matching unit 61 and a peak search unit 62. In the present embodiment, in the post-processing of the output data from the output processor unit 5, template matching and peak search are performed in order to extract the detection points and the coordinate information of the target from the result of the output data of the machine learning model 40.

The template matching unit 61 performs pattern matching processing by obtaining a cross-correlation value between the pattern of the object label of the target and the pattern of the object label of the correct target of the target stored in advance among the input image data, so that the degree of coincidence is calculated and the image data of the similarity map is calculated. Next, the peak search unit 62 performs the following peak search processing on the image data of the similarity map output from the template matching unit 61.
(1) The maximum value filter (the filter is a 6 x 6 filter, and the size can be arbitrarily determined according to the correct label size and the application) is used to retrieve the peak position of the maximum value, and image data having the pixels of the search result is obtained.
(2) Next, a mask processing is performed on the obtained image data to obtain image data including only remaining elements having the same values as those of the original array.
(3) Further, in order to remove noise from the obtained image data, image data is obtained by excluding pixels having a low peak equal to or less than a predetermined threshold value.

Further, the object coordinate detector unit 6 outputs and displays the number of detection points of the target and the coordinate position (range, azimuth) of the target to and on the display unit 7 together with the image data obtained by peak search unit 62.

As described above, the object coordinate detector unit 6 can obtain the number and coordinates of targets included in the observation area of the radar apparatus 1 by combining the processing of the template matching unit 61 and the processing of the peak search unit 62. In addition to the processing used here, a general method for obtaining the center coordinates of a graphic can be applied, and the basic effect of the invention is not impaired.

### ACTION AND ADVANTAGEOUS EFFECT OF EMBODIMENTS

As described above, according to the present embodiment, the image data in which the object label corresponding to the position of the target is drawn can be generated by using the time difference time-series information generated by the signal processing and the machine learning model for image recognition instead of the method for combining CFAR and clustering as the means for estimating the position of the target. As a result, even in such a situation of problem caused in CFAR or clustering, the position of each target can be estimated with high accuracy as compared with the prior art. In this case, such a unique advantageous effect can be obtained that the number of wave sources can be correctly counted and the position can be detected in an object proximity situation where counting is not successful in Doppler FFT, CFAR, and cluster analysis which are prior arts.

In the present embodiment, in particular, for the machine learning model 40 for image recognition, the time-series time-difference radar image data including the reflection intensities information in each azimuth and each range processed by the signal processor unit 2 is input to the machine learning model 40 of the object detector unit 4, so that the image data in which the object label corresponding to the position of the target is drawn can be generated. As a result, the user can simultaneously detect the position of each moving object with high accuracy as compared with the prior art even in an environment where a plurality of moving targets are close to each other. In addition, for example, even in a situation in a tunnel and where walls such as soundproof walls of a highway are close to each other and clutter occurs in radar data, the position of each moving object can be detected simultaneously with high accuracy as compared with the prior art.

The present embodiment further has the following unique advantageous effects:
(1) In the signal processor unit 2, the Doppler velocity FFT processing for separating signals becomes unnecessary. It is noted that, in the prior art, two-dimensional FFT processing of the range (range) and the Doppler velocity (relative velocity) is generally performed.
(2) CFAR and cluster analysis are not required.
(3) There is no need to suppress clutter and side lobes.
(4) Even if a reflection signal from a desired target is weak, it can be detected.
(5) In the object detection processing according to the embodiment, the information of the radar image is not lost.
(6) The detection can be performed with high accuracy even if the number of antenna elements is small.

### MODIFIED EMBODIMENTS

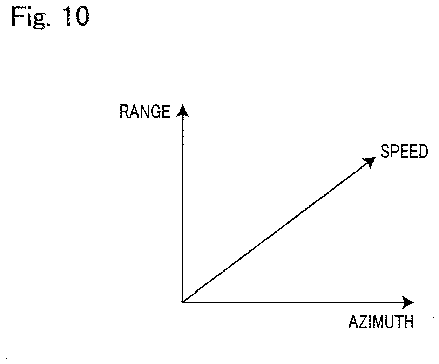

Fig. 10 is a diagram showing dimensions of image data used in the object-position detector apparatus according to the modified embodiment. In the above embodiment, the target is detected using the two-dimensional image data indicating the range with respect to the azimuth. However, the present invention is not limited thereto, and as shown in Fig. 10, the target may be detected using three-dimensional image data which further includes a relative velocity (Doppler velocity) in the dimensions of the azimuth and the range and represents the range and the velocity with respect to the azimuth. In this case, instead of the range FFT unit 22, a range and speed FFT unit is provided, and two-dimensional FFT processing of a known range and speed is performed.

Further, for example, a radar apparatus that does not have a channel with respect to an azimuth and detects the position of a target only with respect to one-dimensional range is also conceivable, and the position may be used as the range. In this case, when the present invention is applied to estimate the wave source position on the range-speed plane, a more accurate target position can be obtained. Therefore, the image data according to the present invention may be image data having at least two dimensions of range, azimuth, and speed.

### APPLICATION EXAMPLES

Application examples of the object-position detector apparatus according to the present embodiment will be described below.

### (1) MONITORING TRAFFIC FLOW IN TUNNELS

The radar apparatus is mounted on a ceiling in a tunnel and is used for monitoring a traffic flow (traffic traffic) in the tunnel. According to the embodiment of the present invention, it is possible to correctly detect a position of a target (moving object) existing in an observation area without being affected by a virtual image formed by an inner wall or vehicles. In addition, adding tracking to the results can be applied to monitoring of a traffic flow and control of notification.

### (2) MONITORING TRAFFIC FLOW IN ENVIRONMENT WITH LARGE STRUCTURE CLOSE TO ROAD

A radar apparatus is mounted on a roadside machine in an environment where a large structure close to a road such as a soundproof wall (sound insulation wall) of a highway exists, and is used for monitoring a traffic flow. According to the embodiment of the present invention, it is possible to correctly detect a position of a target (moving object) existing in an observation area with no influence due to a virtual image formed by a soundproof wall or vehicles. In addition, adding tracking to the results can be applied to monitoring of a traffic flow and control of notification.

### (3) PEDESTRIAN SAFETY MONITORING AT INTERSECTION

The radar apparatus is mounted on a roadside machine at an intersection and used for monitoring a traffic flow. According to the embodiment of the present invention, a position of a target (moving object) present in an observation area is correctly detected with no influence due to a virtual image by humans, a utility pole, a building, or the like, and the results thereof are used for safety monitoring of a pedestrian and control of notification.

### (4) SENSOR FOR OBSTACLE DETECTION OF AUTOMATIC CONVEYANCE VEHICLE OR SELF-PROPELLED ROBOT IN FACTORY

The radar apparatus is mounted on an automatic conveyance vehicle or a self-propelled robot operating in a factory, and is used to detect an obstacle. According to the embodiment of the present invention, a position of a target (obstacle) present in an observation area is correctly detected without being affected by a virtual image by a machine, a worker, or the like in a manufacturing line in a factory, and the results thereof are used for travel control of an automatic conveyance vehicle or a self-propelled robot.

### DIFFERENCES FROM PRIOR ART AND UNIQUE ADVANTAGEOUS EFFECTS

In the embodiment of the present invention, the machine learning model 40 is characterized by outputting information corresponding to the position of the object as image data. In this case, the input data of the machine learning model 40 is image data obtained by time-serializing the image data of the radar signal including the information of the reflection intensity at each position of the range with respect to the azimuth after calculating time differences in time frames on the image data of the radar signal. In addition, the teacher output data of the machine learning model 40 is characterized in that the positional information of the object is represented by a plurality of pixels. As a result, for example, as compared with the prior art using the tensor of the heat map of the range azimuth Doppler (RAD) and the class and position of the correct answer box, since the information regarding the presence or absence of and the position of the plurality of objects is output in the form of one piece of image data, the calculation cost is extremely small. In addition, the structure of the machine learning model 40 is also simple as compared with that of the prior art.

### INDUSTRIAL APPLICABILITY

As described above in detail, according to the present invention, it is possible to detect an object with high accuracy even in such a situation that a plurality of adjacent objects or structures are close to each other such that reflected waves interfere with each other, as compared with the prior art. The object-position detector apparatus of the present invention can be applied to, for example, a counter apparatus that counts a vehicle or a pedestrian, a traffic counter apparatus, an infrastructural radar apparatus, and a sensor apparatus that detects an obstacle of an automatic conveyance vehicle in a factory.

### REFERENCE SIGN LIST

- 1: Radar apparatus
- 2: Signal processor unit
- 3: Input processor unit
- 4: Object detector unit
- 5: Output processor unit
- 6: Object coordinate detector unit
- 7: Display unit
- 8: Storage unit
- 21: AD converter unit
- 22: Range FFT unit
- 23: Arrival direction estimator unit
- 31: Time difference calculator unit
- 32: Normalizer unit
- 40, 40A, and 40B: Machine learning model
- 41: Three-dimensional convolutional encoder
- 42: Two-dimensional convolutional decoder
- 51: Two-dimensional convolutional encoder
- 52: Two-dimensional convolutional decoder
- 61: Template matching unit
- 62: Peak search unit
- 81: Learned machine learning model
- 101: Pixel corresponding to coordinate point with target

## Claims

1. An object-position detector apparatus that detects a position of an object based on a radar signal from a radar apparatus, the object-position detector apparatus comprising:
a position estimator unit configured to estimate presence or absence of and a position of the object using a machine learning model learned by predetermined training image data representing the position of the object, based on image data including the radar signal, and output image data representing the presence or absence of and the position of the estimated object.

2. The object-position detector apparatus as claimed in claim 1, wherein the image data is two-dimensional image data of a range with respect to an azimuth.

3. The object-position detector apparatus as claimed in claim 1, wherein the image data is image data having at least two dimensions of a range, an azimuth, and a speed.

4. The object-position detector apparatus as claimed in any one of claims 1 to 3,
wherein the training image data is represented by an object label that is a graphic including a plurality of pixels indicating the position of the object.

5. The object-position detector apparatus as claimed in claim 4, wherein the object label is configured such that the position of the object is located at a center of the object label.

6. The object-position detector apparatus as claimed in claim 4 or 5, wherein a size of the object label in each dimension direction in the training image data is set as an upper limit, with a main lobe width in each dimension direction in detecting a reflected wave from a point reflection source.

7. The object-position detector apparatus as claimed in claim 4 or 5,
wherein a size of the object label in each dimension direction in the training image data is set as an upper limit, with a main lobe width in each dimension direction determined from a number of channels in an azimuth direction and a radar bandwidth of the radar apparatus.

8. The object-position detector apparatus as claimed in any one of claims 4 to 7,
wherein the object label has a shape convex in each dimension direction.

9. The object-position detector apparatus as claimed in claim 8, wherein the object label has an elliptical shape.

10. The object-position detector apparatus as claimed in any one of claims 1 to 9,
wherein the image data including the radar signal is image data including a reflection intensity at each position of a range with respect to an azimuth.

11. The object-position detector apparatus as claimed in claim 10,
wherein the image data including the radar signal is a plurality of pieces of time-series image data acquired at a plurality of different times based on image data including the reflection intensity at each position of the range with respect to the azimuth.

12. The object-position detector apparatus as claimed in claim 11,
wherein the image data including the radar signal is image data including reflection intensities of time differences obtained by calculating the reflection intensities of the time differences for a plurality of pieces of time-series image data acquired at the plurality of different times.

13. The object-position detector apparatus as claimed in claim 11, wherein the image data including the radar signal is a plurality of pieces of time-series image data acquired at a plurality of different times based on subtracted image data including the reflection intensity at each position of the range with respect to the azimuth, the subtracted image data being obtained by subtracting, after Doppler FFT is performed on the image data, a zero Doppler component obtained by the Doppler FFT from the image data including the radar signal.

14. The object-position detector apparatus as claimed in any one of claims 1 to 13,
wherein the object-position detector apparatus includes either one of:
(1) a tunnel traffic flow monitoring sensor apparatus that measures a traffic flow in a tunnel;
(2) a traffic flow monitoring sensor apparatus provided near a predetermined structure;
(3) a pedestrian monitoring sensor apparatus that is provided at an intersection and measures a pedestrian at the intersection; and
(4) a sensor apparatus that detects an obstacle of an automatic conveyance vehicle or a self-propelled robot in a factory.

15. An object position detection method for an object-position detector apparatus that detects a position of an object based on a radar signal from a radar apparatus, the method comprising the step of:
estimating, by a position estimator unit, presence or absence of and a position of the object using a machine learning model learned by predetermined training image data representing the position of the object, based on image data including the radar signal, and outputs image data representing the presence or absence of and the position of the estimated object.

16. The object position detection method as claimed in claim 15,
wherein the image data is two-dimensional image data of a range with respect to an azimuth.

17. The object position detection method as claimed in claim 15,
wherein the image data is image data having at least two dimensions of a range, an azimuth, and a speed.

18. The object position detection method as claimed in any one of claims 15 to 17,
wherein the teacher image data is represented by an object label that is a graphic including a plurality of pixels indicating the position of the object.

19. The object position detection method as claimed in claim 18, wherein the object label is configured such that the position of the object is located at a center of the object label.

20. The object position detection method as claimed in claim 18 or 19, wherein a size of the object label in each dimension direction in the teacher image data is set as an upper limit, with a main lobe width in each dimension direction in detecting a reflected wave from a point reflection source.

21. The object position detection method as claimed in claim 18 or 19, wherein a size of the object label in each dimension direction in the teacher image data is set as an upper limit, with a main lobe width in each dimension direction determined from a number of channels in an azimuth direction and a radar bandwidth of the radar apparatus.

22. The object position detection method as claimed in any one of claims 18 to 21,
wherein the object label has a shape convex in each dimension direction.

23. The object position detection method as claimed in claim 22, wherein the object label has an elliptical shape.

24. The object position detection method as claimed in any one of claims 15 to 23,
wherein the image data including the radar signal is image data including a reflection intensity at each position of a range with respect to an azimuth.

25. The object position detection method as claimed in claim 24,
wherein the image data including the radar signal is a plurality of pieces of time-series image data acquired at a plurality of different times based on image data including the reflection intensity at each position of a range with respect to the azimuth.

26. The object position detection method as claimed in claim 25,
wherein the image data including the radar signal is image data including reflection intensities of time differences obtained by calculating the reflection intensities of the time differences for a plurality of pieces of time-series image data acquired at the plurality of different times.

27. The object position detection method as claimed in claim 25,
wherein the image data including the radar signal is a plurality of pieces of time-series image data acquired at a plurality of different times based on subtracted image data including the reflection intensity at each position of the range with respect to the azimuth, the subtracted image data being obtained by subtracting, after Doppler FFT is performed on the image data, a zero Doppler component obtained by the Doppler FFT from the image data including the radar signal.
